# EUROPÄISCHE PATENTSCHRIFT

(11) **EP 4 577 399 B1**
(45) Veröffentlichungstag und Bekanntmachung des Hinweises auf die Patenterteilung: **29.04.2026**
(21) Anmeldenummer: 24745393.9
(22) Anmeldetag: 12.07.2024
(51) Int. Cl.: B31F 1/28

(54) **VERFAHREN ZUM BETRIEB EINER WELLPAPPENANLAGE SOWIE WELLPAPPENANLAGE**
METHOD FOR OPERATING A CORRUGATOR, AND CORRUGATOR
PROCÉDÉ POUR FAIRE FONCTIONNER UNE INSTALLATION DE CARTON ONDULÉ ET INSTALLATION DE CARTON ONDULÉ

(30) Priorität: 17.07.2023 DE 102023206773
(43) Veröffentlichungstag der Anmeldung: 02.07.2025
(73) Patentinhaber: BHS Corrugated Maschinen- und Anlagenbau GmbH, 92729 Weiherhammer (DE)
(72) Erfinder: HUBER, Simon, 92224 Amberg (DE)
(74) Vertreter: FDST Patentanwälte
(86) Internationale Anmeldenummer: PCT/EP2024/069831
(87) Internationale Veröffentlichungsnummer: WO 2025/016907

(56) Entgegenhaltungen:
- DE-A1- 10 312 601
- DE-A1- 102021 212 245
- US-A- 3 058 869

## Beschreibung

Die Erfindung betrifft ein Verfahren zum Betrieb einer Wellpappenanlage sowie eine entsprechende Wellpappenanlage.

Eine Wellpappenanlage dient zur Herstellung von Wellpappe. Hierzu werden mehrere Bahnen, genauer Papierbahnen, von einem jeweiligen Abroller abgerollt und entlang einer Anzahl an Prozessabschnitten der Wellpappenanlage zu einer Wellpappenbahn verbunden. Die Wellpappenanlage weist regelmäßig ein Wet-End auf, entlang welchem die Bahnen zu einer Wellpappenbahn verbunden werden, und anschließend ein Dry-End, entlang welchem die Wellpappenbahn konfektioniert wird. Beispielsweise wird die Wellpappenbahn mit einem Schneid-/Rillautomaten längs in Förderrichtung in mehrere Teilbahnen zerteilt und mit zusätzlichen Schnitten und Rillen versehen. Anschließend werden die Teilbahnen mit einem Querschneider in einzelne Bögen zerteilt und schließlich abgelegt.

Die Bögen sollen regelmäßig mit einem Druckbild versehen sein, welches grundsätzlich entweder nachträglich auf die fertig zugeschnittenen Bögen aufgedruckt werden kann (Post-Print) oder im Voraus auf eine der Bahnen (Pre-Print). Speziell beim Pre-Print ergibt sich dann das Problem, das die Bahn und das darauf aufgedruckte Druckbild durch die Verarbeitung in der Wellpappenanlage prozessbedingt schrumpfen. Eine Schrumpfung ergibt sich insbesondere durch Temperierung und Befeuchtung der Bahn innerhalb der Wellpappenanlage. Beim Konfektionieren ist das Druckbild somit unter Umständen nicht mehr maßhaltig. Zur Kompensation ist es denkbar, die Konfektionierung im Dry-End nachzuführen. Dies ist jedoch nachteilig, da einerseits eine Umstellung z.B. des Schneid-/Rillautomaten zwischenzeitlich zu Ausschuss führt und andererseits dadurch auch die absoluten Abmessungen der Bögen verändert werden. Daher ist es wünschenswert, direkt die Schrumpfung des Druckbilds zu kompensieren. Dies ist grundsätzlich möglich, indem das Druckbild bereits vergrößert aufgedruckt wird, sodass ein bestimmtes Maß an Schrumpfung berücksichtigt wird. Problematisch ist dann jedoch, dass nur wenig Spielraum für einen variablen Betrieb der Wellpappenanlage besteht. Beispielsweise führt eine Änderung der Bahngeschwindigkeit zu veränderten Kontaktzeiten der Bahn beim Temperieren und Befeuchten und somit zu einer veränderten Schrumpfung. Entsprechend muss die Bahngeschwindigkeit möglichst konstant gehalten werden.

Die DE 103 12 601 A1 offenbart eine Material-Bahn (3) zum Einsatz in einer Wellpappenanlage zur Herstellung von Wellpappenbögen. Die Wellpappenanlage weist mindestens zwei Abroll-Einrichtungen (2, 9, 21) zum Abrollen von MaterialBahnen (3, 8, 22) auf. Zur Bedruckung von mindestens einer der Bahnen (3, 22) ist eine Druckeinrichtung (27) vorgesehen. Die Material-Bahn (3) weist eine die Druckqualität steigernde Beschichtung (3b) auf.

Die US 3 058 869 A beschreibt die Herstellung von vorbedruckter Wellpappe und ein Schneidverfahren, bei dem die Schnittposition automatisch an den Enden jedes bedruckten Musters ausgerichtet wird.

Die DE 10 2021 212 245 A1 offenbart eine Anordnung für eine Wellpappenanlage zum Herstellen von Wellpappe. Die Wellpappenanlage umfasst eine Materialbahn-Abgabevorrichtung (1) zum Abgeben einer Materialbahn (10) und eine der Materialbahn-Abgabevorrichtung (1) in einer Transportrichtung (11) der Materialbahn (10) nachgeordnete Rand-Schneidvorrichtung (22) mit mindestens einer Rand-Schneideinrichtung (24) zum randseitigen Schneiden der Materialbahn (10), sowie eine der Rand-Schneidvorrichtung (22) in der Transportrichtung (11) der Materialbahn (10) nachgeordnete Digital-Druckvorrichtung (18) zum Bedrucken der Materialbahn (10).

Vor diesem Hintergrund ist es eine Aufgabe der Erfindung, ein verbessertes Verfahren zum Betrieb einer Wellpappenanlage sowie eine entsprechend verbesserte Wellpappenanlage anzugeben. Insbesondere soll ein möglichst maßhaltiges Druckbild gewährleistet werden.

Die Aufgabe wird erfindungsgemäß gelöst durch ein Verfahren mit den Merkmalen gemäß Anspruch 1 sowie durch eine Wellpappenanlage mit den Merkmalen gemäß Anspruch 13. Vorteilhafte Ausgestaltungen, Weiterbildungen und Varianten sind Gegenstand der Unteransprüche. Die Ausführungen im Zusammenhang mit dem Verfahren gelten sinngemäß auch für die Wellpappenanlage. Sofern nachfolgend implizit oder explizit Schritte des Verfahrens angegeben sind, ergeben sich vorteilhafte Ausgestaltungen für die Wellpappenanlage insbesondere dadurch, dass diese ausgebildet ist, einen oder mehrere dieser Schritte auszuführen. Hierzu weist die Wellpappenanlage insbesondere eine entsprechend ausgebildete Steuereinheit auf.

Ein wichtiger Aspekt der vorliegenden Erfindung ist insbesondere eine Regelung der Schrumpfung des Druckbilds innerhalb der Wellpappenanlage. Dies steht im Gegensatz zu einer Regelung der Bahngeschwindigkeit, welche durch die hier beschriebene Regelung der Schrumpfung vorteilhaft nahezu beliebig variiert werden kann, bei einem zugleich besonders maßhaltigen Druckbild. Insgesamt ist ein besonders flexibler Betrieb bei zugleich maßhaltigem Druckbild möglich.

Das Verfahren dient zum Betrieb einer Wellpappenanlage. Bei dem Verfahren werden mehrere Bahnen, insbesondere Papierbahnen, in einem Prozessabschnitt der Wellpappenanlage zu einer Wellpappenbahn verbunden. Dieser Prozessabschnitt ist insbesondere ein Teil eines Wet-Ends der Wellpappenanlage oder entspricht diesem. Stromab des Wet-Ends weist die Wellpappenanlage insbesondere ein Dry-End auf, welche wenigstens einen weiteren Prozessabschnitt der Wellpappenanlage enthält.

Eine (d.h. zumindest eine) der Bahnen ist mit einem Druckbild bedruckt, welches eine Anzahl an wiederkehrenden Druckbildelementen aufweist. Diese Bahn wird auch als bedruckte Bahn bezeichnet. Das Druckbild stellt somit den gesamte Druck auf der Bahn dar. Das Bedrucken kann innerhalb oder außerhalb der Wellpappenanlage erfolgen, in jedem Fall liegt ein Pre-Print vor. Die Druckbildelemente wiederholen sich insbesondere gemäß der Anzahl an Bögen, welche letztendlich hergestellt werden sollen. Die einzelnen Druckbildelemente sind z.B. Logos, Muster, Rahmen, Verzierungen, Markierungen, Marken, Registermarken, Steuermarken usw. Die Druckbildelemente sind insbesondere wiederkehrend wenigstens in einer Längsrichtung der Bahn angeordnet, d.h. in Förderrichtung. Zweckmäßigerweise sind die Druckbildelemente auch wiederkehrend in einer Querrichtung angeordnet, d.h. senkrecht zur Förderrichtung und für entsprechend viele nebeneinander laufende Teilbahnen.

Vorliegend wird ohne Beschränkung der Allgemeinheit davon ausgegangen, dass genau eine der Bahnen bedruckt ist und dass diese eine Deck- oder Kaschierbahn der Wellpappenbahn ist. Die Erfindung ist jedoch ebenso auch bei mehreren bedruckten Bahnen anwendbar, auch muss nicht zwingend die Deck- oder Kaschierbahn bedruckt sein.

Im Rahmen des hier erfindungsgemäßen Verfahrens wird für das Druckbild ein Soll-Endmaß vorgegeben, welches stromab des Prozessabschnitts vorliegen soll. Das Soll-Endmaß ist beispielsweise ein Abstand zwischen zwei insbesondere gleichen Druckbildelementen (äquivalent: relative Position zueinander) oder eine Abmessung (z.B. Größe, Länge, Breite) eines einzelnen Druckbildelements. Das Soll-Endmaß gibt an, wie das Druckbild tatsächlich beim Einlaufen in das Dry-End und speziell beim Konfektionieren und somit insbesondere auch am fertigen Bogen dimensioniert sein soll. Dabei wird für das Soll-Endmaß zweckmäßigerweise auch eine vorbestimmte Toleranz akzeptiert, z.B. +/- 5%. Das Soll-Endmaß wird beispielsweise von einer übergeordneten Steuerung der Wellpappenanlage anhand von bekannten Druckdaten zur bedruckten Bahn vorgegeben oder über eine Benutzerschnittstelle eingegeben. Die übergeordnete Steuerung und/oder die Benutzerschnittstelle sind insbesondere ein Teil der Steuereinheit der Wellpappenanlage. Optional wird analog auch ein Offset für das Soll-Endmaß angegeben, z.B. zur manuellen Korrektur. Das optimale Soll-Endmaß wird beispielsweise experimentell ermittelt, z.B. in einem Andruckprozess separat vom eigentlichen Betrieb, oder wird iterativ im Betrieb ermittelt oder wird basierend auf Erfahrungen vorgegeben.

Das Druckbild weist stromab des Prozessabschnitts ein Ist-Endmaß auf, welches sich regelmäßig von dem Soll-Endmaß unterscheidet. Das Ist-Endmaß wird mit einer Messeinheit der Wellpappenanlage gemessen und mit dem Ist-Endmaß und dem Soll-Endmaß wird ein Endmaß-Fehler ermittelt, insbesondere errechnet. Das Ist-Endmaß, d.h. das tatsächliche Endmaß, ist stark abhängig von der Bearbeitung innerhalb des Prozessabschnitts und unterliegt natürlicherweise Schwankungen. Entsprechend ergibt sich als Unterschied zwischen dem Ist-Endmaß und dem Soll-Endmaß der genannte Endmaß-Fehler, welcher z.B. als eine Differenz oder als ein Skalierungsfaktor dargestellt wird. Je nachdem, wie der Prozessabschnitt geführt wird, ist das Ist-Endmaß größer oder kleiner als das Soll-Endmaß.

Die Wellpappenanlage weist erfindungsgemäß einen Regler auf, welcher den Prozessabschnitt abhängig von dem Endmaß-Fehler steuert, um diesen Endmaß-Fehler zu minimieren (d.h. der Endmaß-Fehler wird mittels des Reglers minimiert). Der Endmaß-Fehler wird demnach unmittelbar oder wenigstes mittelbar als Fehlersignal für den Regler verwendet. Das Ist-Endmaß und das Soll-Endmaß werden entsprechend unmittelbar oder wenigstens mittelbar als ein Istwert beziehungsweise ein Sollwert für den Regler verwendet. Der Regler gibt dann eine Steuergröße aus, mit welcher der Prozessabschnitt gesteuert wird, Beispiele hierfür sind weiter unten genannt. Sofern sich nun durch den Prozessabschnitt eine variierende Verschiebung oder Skalierung des Druckbilds und dessen einzelner Druckbildelemente ergibt, was prinzipbedingt zu einem variierende Ist-Endmaß führt, wird dies durch den Regler ausgeglichen. Optional greift der Regler erst dann ein, wenn der Endmaß-Fehler einen bestimmten Grenzwert über-/unterschreitet, welcher durch die weiter oben genannte Toleranz definiert ist.

Von besonderer Bedeutung ist vorliegend auch, dass der Regler den Prozessabschnitt steuert, d.h. einen oder mehrere Anlagenteil der Wellpappenanlage, und nicht einen Drucker, welcher zum Bedrucken der Bahn verwendet wird. Die Regelung ist demnach einem Druckprozess zum Bedrucken der Bahn nachgelagert und vorteilhafterweise auch unabhängig davon.

In einer besonders bevorzugten Ausgestaltung ist das Druckbild mit einem Druckmaß aufgedruckt, welches sich aus einer Soll-Schrumpfung und dem Soll-Endmaß ergibt, sodass der Regler eine Schrumpfung des Druckbilds (entlang des Prozessabschnitts) auf die Soll-Schrumpfung regelt. Typischerweise erfolgt entlang des Prozessabschnitts eine echte, positive Schrumpfung, d.h. das Soll-Endmaß ist kleiner als das Druckmaß und die Bahn wird somit vergrößert bedruckt, dies wird auch als "vergrößertes Druckmaß" bezeichnet. Hiervon wird vorliegend auch ohne Beschränkung der Allgemeinheit ausgegangen. Grundsätzlich möglich ist aber auch eine negative Schrumpfung, d.h. das Soll-Endmaß ist größer als das Druckmaß, die Ausführungen gelten entsprechend analog.

Das Bedrucken mit dem vergrößerten Druckmaß gestattet eine definierte Schrumpfung in gewissem Umfang. Dieser Umfang ist definiert durch eine Abweichung des Druckmaßes vom Soll-Endmaß und wird mit einem Kompensationswert quantifiziert, welcher einen Unterschied zwischen Druckmaß und Soll-Endmaß angibt. Der Kompensationswert ist beispielsweise ein Faktor (Skalierung des Druckmaßes relativ zum Soll-Endmaß) oder eine Verschiebung (Differenz von Druck- und Soll-Position eines Druckbildelements auf der Bahn). Entsprechend wird mit dem Druckmaß und dem Soll-Endmaß *de facto* eine Soll-Schrumpfung vorgegeben, nämlich diejenige Schrumpfung, welche entlang des Prozessabschnitts erlaubt wird, sodass das Druckmaß auf das Soll-Endmaß schrumpft. Analog ergibt sich dann bei einer tatsächlichen und möglicherweise variierenden Schrumpfung stromab des Prozessabschnitts eine Ist-Schrumpfung, welche sich gegebenenfalls von der Soll-Schrumpfung unterscheidet. Der weiter oben bereits genannte Endmaß-Fehler für den Regler ist dann auch ein Maß dafür, wie die Ist-Schrumpfung von der Soll-Schrumpfung abweicht, und wird daher auch als "Schrumpfungs-Abweichung" bezeichnet. Durch die hier beschriebene Regelung des Endmaß-Fehlers wird dann effektiv die Schrumpfung des Druckbilds auf die Soll-Schrumpfung geregelt, sodass eine Schrumpfungs-Regelung realisiert ist. Die Soll-Schrumpfung ist dabei durch den Kompensationswert definiert. Der Kompensationswert ist zweckmäßigerweise abhängig von der Papiersorte und/oder Grammatur der (bedruckten) Bahn.

Das hier beschriebene Verfahren verlangt, dass das Soll-Endmaß vorgegeben wird. Dies wird auch erfüllt, wenn konkret die Soll-Schrumpfung oder der Kompensationswert vorgegeben wird, da mit dieser beziehungsweise diesem dann über das bekannte Druckmaß automatisch auch das Soll-Endmaß vorgegeben ist.

In einer geeigneten Ausgestaltung wird aus dem Druckmaß und dem Ist-Endmaß die Ist-Schrumpfung errechnet und analog aus dem Druckmaß und dem Soll-Endmaß die Soll-Schrumpfung, sofern diese nicht schon direkt vorgegeben ist. Die Ist-Schrumpfung wird dann mit der Soll-Schrumpfung verglichen und daraus der Endmaß-Fehler errechnet, z.B. als Differenz oder Verhältnis von Ist-Schrumpfung und Soll-Schrumpfung oder kombiniert als Differenz von Ist-Schrumpfung und Soll-Schrumpfung im Verhältnis zur Soll-Schrumpfung. Der Endmaß-Fehler gibt denjenigen Anteil der gesamten Schrumpfung an, welcher die Ist-Schrumpfung von der Soll-Schrumpfung unterscheidet, also unbeabsichtigt ist und kompensiert werden soll. Analog und im Ergebnis äquivalent kann der Endmaß-Fehler auch direkt aus Messung und Vergleich von Ist-Endmaß und Soll-Endmaß ermittelt werden, z.B. gemäß (Ist-Endmaß - Soll-Endmaß) / Soll-Endmaß. Wie aus diesen Ausführungen deutlich wird, sind verschiedene Ausgestaltungen hinsichtlich der Wahl und Verarbeitung von Ist-Endmaß und Soll-Endmaß sowie Wahl und Ermittlung des Endmaß-Fehlers möglich und geeignet.

Vorliegend wird ohne Beschränkung der Allgemeinheit von einer Wellpappenanlage ausgegangen, welche mehrere Anlagenteile wie folgt aufweist: mehrere Abroller, mit welchen jeweils eine der Bahnen abgerollt wird, einen oder mehrere Single Facer, mit welchem jeweils eine der Bahnen gewellt wird und mit einer anderen der Bahnen verbunden wird, einen Vorheizer und ein Leimwerk, mit welchen die Bahnen miteinander verleimt werden, und eine Heiz- und Zugpartie (Double Facer), mit welcher die miteinander verleimten Bahnen zusammengedrückt und getrocknet werden, sodass schließlich eine Wellpappenbahn ausgegeben wird. Die vorgenannten Anlagenteile werden zusammenfassend auch als Wet-End bezeichnet. Auf die exakte Konfiguration des Wet-Ends kommt es vorliegend aber nicht an und dieses kann auch anders ausgestaltet sein. An das Wet-End schließt sich vorliegend ein Dry-End an, zum Konfektionieren der Wellpappenbahn. Ohne Beschränkung der Allgemeinheit wird vorliegend von einem Dry-End mit einem Schneid-/Rillautomaten, einem Querschneider stromab davon und einer Ablage ausgegangen. Andere Konfigurationen sind aber ebenso möglich. Vorliegend wird ohne Beschränkung der Allgemeinheit davon ausgegangen, dass mit dem Schneid-/Rillautomaten die Wellpappenbahn längs in Förderrichtung in mehrere Teilbahnen zerteilt wird und optional noch mit zusätzlichen Schnitten und Rillen versehen wird und dass anschließend die Teilbahnen mit dem Querschneider in einzelne Bögen zerteilt werden und schließlich in der Ablage abgelegt werden.

Die Wellpappenanlage weist weiterhin eine Steuereinheit auf, um das hier beschriebene Verfahren auszuführen. Insbesondere ist der genannte Regler ein Teil dieser Steuereinheit.

Die Messeinheit weist zur Messung des Ist-Endmaßes eine Sensoreinheit auf, vorzugsweise eine optische Sensoreinheit, z.B. eine Kamera. Die Sensoreinheit ist insbesondere auf die bedruckte Bahn gerichtet und erfasst das durchlaufende Druckbild und damit auch die einzelnen Druckbildelemente. Dabei ist es nicht zwingend erforderlich, dass die Kamera die gesamte Bahn überwacht. Die Messeinheit weist weiterhin eine Auswerteeinheit auf, welche mit der Sensoreinheit verbunden ist und anhand entsprechender Sensordaten der Sensoreinheit dann das Ist-Endmaß ermittelt. Das Ist-Endmaß wird insbesondere wiederkehrend gemessen. Da das Druckbild aufgrund der wiederkehrenden Druckbildelemente eine Periodizität zumindest in Förderrichtung aufweist, ist mit derselben Periodizität eine Messung des Ist-Endmaßes möglich. Die optische Messung des Ist-Endmaßes wie beschrieben eignet sich besonders für eine Messung an der Wellpappenbahn, d.h. nachdem die einzelnen Bahnen miteinander verbunden wurden, denn an dieser Wellpappenbahn ist eine exakte Breitenmessung nicht mehr ohne weiteres möglich.

Für das Ist-Endmaß sind verschiedene Ausgestaltungen geeignet. Besonders bevorzugt ist eine Ausgestaltung, bei welcher das Ist-Endmaß ein Abstand zwischen zwei Druckbildelementen des Druckbilds ist (Abstandsmessung oder relative Positionsmessung) oder bei welcher das Ist-Endmaß eine Abmessung eines einzelnen Druckbildelements des Druckbilds ist (Größenmessung oder absolute Positionsmessung). Allgemeiner wird demnach das Ist-Endmaß entweder als relatives Maß, z.B. Abstand, zwischen zwei unterschiedlichen oder gleichen Druckbildelementen bestimmt oder als absolutes Maß, z.B. Größe, an einem einzelnen Druckbildelement. Welche dieser beiden Ausgestaltungen genutzt wird, hängt unter anderem von dem konkreten Auftrag und den tatsächlich vorhandenen Druckbildelementen ab.

Die Bahnen und die Wellpappenbahn werden allgemein in einer Förderrichtung durch die Wellpappenanlage geführt. Bevorzugterweise wird dann das Ist-Endmaß in einer Querrichtung quer zur Förderrichtung gemessen. Analog wird auch das Soll-Endmaß in Querrichtung vorgegeben. Typischerweise ist die Schrumpfung in Querrichtung um etwa einen Faktor 3 größer als in Förderrichtung, sodass eine Messung in Querrichtung einfacher ist. Die Minimierung des Endmaß-Fehlers kommt aber insbesondere beiden Richtungen zugute.

Die Regelung mittels des Reglers beseitigt den Endmaß-Fehler, indem entsprechend geeignet in einen Verarbeitungsprozess, welcher entlang des Prozessabschnitts erfolgt, eingegriffen wird. Die Regelung regelt somit die Schrumpfung, welche sich durch den Verarbeitungsprozess entlang des Prozessabschnitts ergibt, auf die Soll-Schrumpfung. Der Verarbeitungsprozess ist somit vorteilhaft besonders flexibel und der Prozessabschnitt kann entsprechend variabel geführt werden, ohne dass die Maßhaltigkeit des Druckbilds nachteilig beeinflusst wird.

Allgemein weist der Prozessabschnitt wenigstens eine Stellgröße auf, welche zur Minimierung des Endmaß-Fehlers mit dem Regler eingestellt wird. Die Stellgröße ist einem entsprechenden Stellglied zugeordnet, welches Teil des Prozessabschnitts ist und welches vom Regler mit einer geeigneten Steuergröße gesteuert wird. Die Stellgröße ist vorzugsweise ausgewählt aus folgenden Stellgrößen: ein Umschlingungswinkel des Vorheizers; eine Menge an zugeführter Wärmezufuhr in der Heiz- und Zugpartie; eine Temperatur oder ein Dampfdruck einer Heizplatte, insbesondere als Teil der Heiz- und Zugpartie; eine Menge an Wasser, welche mit einem Sprühbalken oder Dampfsprühbalken der Wellpappenanlage (auf wenigstens eine der Bahnen) aufgetragen wird; eine Menge an Leim, welcher mit dem Leimwerk aufgetragen wird; eine Bahngeschwindigkeit der Wellpappenanlage, d.h. eine Fördergeschwindigkeit für eine der Bahnen oder für die Wellpappenbahn. Speziell am Leimwerk ergibt sich regelmäßig eine Quellung der Bahn aufgrund der über den Leim in die Bahn eingebrachten Feuchtigkeit. Auch Sprüh- und Dampfsprühbalken wirken entsprechend quellend. Umgekehrt wirken jegliche Heiz- und Trocknungsprozesse schrumpfend. Geeignete Stellglieder, welche vom Regler angesteuert werden, sind entsprechend generell solche Stellglieder, welche Wärme und/oder Feuchtigkeit in zumindest eine der Bahnen eintragen, d.h. Heiz-, Kühl-, Trocken- und/oder Befeuchtungsvorrichtungen. Zu den genannten Stellgrößen sind dies insbesondere eine Heizrolle des Vorheizers, die genannte Heizplatte der Heiz- und Zugpartie, eine Leimauftragsrolle des Leimwerks, ein Sprühbalken oder Dampfsprühbalken, ein Trockner, z.B. IR- oder Heißlufttrockner. Generell sind jegliche Anlagenteile, welche die Schrumpfung der bedruckten Bahn beeinflussen, geeignete Stellglieder für die hier beschriebene Regelung.

Auch die Bahngeschwindigkeit beeinflusst die Schrumpfung und somit den Endmaß-Fehler, da mit variierender Bahngeschwindigkeit auch die Kontaktzeit der bedruckten Bahn mit den verschiedenen Anlagenteilen variiert und dadurch die Bahn entsprechend schwankend temperiert und befeuchtet wird (zumindest sofern diese Anlagenteile nicht exakt kompensierend betrieben werden). Die Bahngeschwindigkeit ist somit - wie oben bereits beschrieben - grundsätzlich zwar eine geeignete Stellgröße für die Regelung, dies begrenzt aber die Flexibilität im Betrieb der Wellpappenanlage und verringert gegebenenfalls deren Ausstoßmenge. Abseits einer möglichen Nutzung der Bahngeschwindigkeit als Stellgröße der hier beschriebenen Regelung wird die Bahngeschwindigkeit aber regelmäßig auch aus anderen Gründen gegebenenfalls variiert, sodass sich ein entsprechender Endmaß-Fehler ergibt. Ein solcher Endmaß-Fehler aufgrund einer (zeitlich) variierenden Bahngeschwindigkeit wird nun vorliegend mittels des Reglers vorteilhaft minimiert. Entsprechend steuert der Regler den Prozessabschnitt vorzugsweise unabhängig von der Bahngeschwindigkeit der Wellpappenanlage. Darunter wird insbesondere verstanden, dass die Bahngeschwindigkeit kein Eingangsparameter für den Regler ist. Mit anderen Worten: der Regler gewährleistet im Betrieb mit variierender Bahngeschwindigkeit eine optimale Maßhaltigkeit des Druckbilds.

Vorteilhaft ist auch eine Ausgestaltung, bei welcher das Soll-Endmaß abhängig von der Bahngeschwindigkeit vorgegeben wird. In einer möglichen Ausgestaltung sind mehrere aufeinanderfolgende Geschwindigkeitsintervalle für die Bahngeschwindigkeit definiert und jedem dieser Geschwindigkeitsintervalle ist ein bestimmter Wert für das Soll-Endmaß zugeordnet, z.B. mittels unterschiedlicher Werte für die Soll-Schrumpfung. Diese Zuordnung wird beispielsweise experimentell ermittelt. Je nachdem, welche Bahngeschwindigkeit dann tatsächlich gefahren wird, wird ein entsprechender Wert für das Soll-Endmaß verwendet. Damit lässt sich die Regelung weiter optimieren.

Optional weist die Wellpappenanlage zusätzlich zu dem hier beschriebenen (ersten) Regler noch einen oder mehrere weitere (zweite) Regler auf, z.B. einen Warpregler oder einen Verklebungsregler. Im Falle mehrerer Regler weisen diese dann regelmäßig überlappende oder sogar identische Stellgrößen auf, sodass dieselbe Stellgröße dann von mehreren Reglern beeinflusst wird. Zwei Beispiele für Regelungen, welche mit solchen weiteren Reglern umgesetzte werden, sind eine Warpregelung, zur Minimierung von Warp der fertigen Bögen, und eine Verklebungsregelung, zur Regelung des Leimauftrags im Leimwerk. Diese Regelungen sollen eine möglichst gute Qualität der Wellpappenbahn und der fertigen Bögen gewährleisten und erfordern daher eine gewisse Einstellbarkeit der jeweils verwendeten Stellgröße/Stellgrößen. Die hier beschriebene Regelung, soll eine solche zusätzliche Regelung möglichst nicht nachteilig stören und wird daher demgegenüber zweckmäßigerweise nachgeordnet. In einer geeigneten Ausgestaltung stellt der Regler hierzu eine Stellgröße des Prozessabschnitts innerhalb eines Einstellbereichs ein und zumindest ein Grenzwert (z.B. Minimum oder Maximum) des Einstellbereichs ist durch die Warpregelung oder die Verklebungsregelung der Wellpappenanlage vorgegeben. Mit anderen Worten: die Warp- oder Verklebungsregelung mit dem zweiten Regler erfordert, dass die Stellgröße, welche vom ersten Regler eingestellt wird, innerhalb bestimmter Grenzwerte liegt, um eine hinreichende Qualität hinsichtlich Warp beziehungsweise Verleimung zu erzielen. Der Einstellbereich wird daher auf diese Grenzwerte beschränkt. Typischerweise wird die Stellgröße, deren Einstellbereich beschränkt wird, sowohl vom ersten Regler als auch vom zweiten Regler verwendet, dies ist aber an sich nicht zwingend; ausreichend ist bereits, dass für die Stellgröße abseits von der (Schrumpfungs-)Regelung ein Grenzwert eingehalten werden soll, z.B. um sicherzustellen, dass der zweite Regler mit einer anderen Stellgröße noch ausreichend gegensteuern kann.

Die Sensoreinheit (oder allgemein die gesamte Messeinheit) ist innerhalb der Wellpappenanlage vorzugsweise an einer Stelle angeordnet, stromab welcher keine signifikante Änderung des Druckbilds mehr zu erwarten ist. Dies ist insbesondere stromab des Wet-Ends und am Eingang des Dry-Ends der Fall. Insbesondere markiert die bereits genannte Heiz- und Zugpartie der Wellpappenanlage ein Ende des Wet-Ends, sodass die Sensoreinheit dann in einer geeigneten Ausgestaltung stromab der Heiz- und Zugpartie angeordnet ist. Allgemein ist die Sensoreinheit vorzugsweise stromab des Wet-Ends und/oder im Dry-End angeordnet.

Besonders vorteilhaft ist auch eine Ausgestaltung, bei welcher die Sensoreinheit (oder die gesamte Messeinheit) stromauf des bereits genannten Schneid-/Rillautomaten der Wellpappenanlage angeordnet ist und wobei die Messeinheit zusätzlich zur Erkennung von Marken zwecks Steuerung des Schneid-/Rillautomaten verwendet wird. Die Begriffe "stromauf" (vor) und "stromab" (nach) sind relativ zur Förderrichtung zu verstehen. Die genannten Marken sind insbesondere aufgedruckt und dienen als Steuermarken zur Aktivierung des Schneid-/Rillautomaten. Entsprechend können dieselbe Sensoreinheit/Messeinheit und optional auch dieselben Marken zur Steuerung des Querschneiders genutzt werden. Die Marken sind beispielsweise Balkenmarken, Strichcodes, QR-Codes oder dergleichen und allgemein Druckbildelemente des Druckbilds. Diese Marken werden geeigneterweise auch zur Messung des Ist-Endmaßes verwendet, dies ist aber nicht zwingend und es können auch andere Druckbildelemente hierfür verwendet werden. Wichtiger ist, dass die Messeinheit nun wenigstens zwei Funktionen erfüllt, nämlich einmal die Messung des Ist-Endmaßes und einmal die Erkennung der Marken zur Steuerung eines Anlagenteils des Dry-Ends, hier des Schneid-/Rillautomaten.

Das Bedrucken der Bahn mit dem Druckbild kann außerhalb oder innerhalb der Wellpappenanlage erfolgen, wobei letzteres auch als inline-Druck bezeichnet wird und bevorzugt ist. Für den inline-Druck ist in die Wellpappenanlage ein Drucker integriert, welcher die eine der Bahnen mit dem Druckbild bedruckt und dadurch die bedruckte Bahn erzeugt. Der Drucker ist vorzugsweise unmittelbar stromab eines der Abroller angeordnet und bedruckt dann eine der Bahnen noch bevor diese mit den übrigen Bahnen zur Wellpappenbahn verbunden wird. Dies ist aber nicht zwingend. Der Drucker ist insbesondere kein Teil des Prozessabschnitts, sondern außerhalb davon. Der Drucker selbst enthält vorzugsweise keine Druckbildregelung zur Einstellung des Druckmaßes oder dergleichen. Eine Regelung auf das Soll-Endmaß erfolgt demnach nicht mit dem Drucker, sondern außerhalb desselben mit dem hier beschriebenen Regler und durch eine Steuerung der Wellpappenanlage abseits des Druckers. Optional wird der Drucker jedoch zumindest derart gesteuert, z.B. mit der Steuereinheit, dass zusätzlich zur bereits beschriebenen Regelung noch das Druckmaß angepasst wird, insbesondere indem der Kompensationswert (z.B. über die Soll-Schrumpfung) entsprechend je nach Bedarf variiert wird. Beispielsweise ist die Wellpappenanlage als lernendes System ausgebildet, welches den Kompensationswert über mehrere Produktionsaufträge hinweg nach und nach anpasst. Alternativ oder zusätzlich erfolgt eine statistische Auswertung der gemessenen Ist-Endmaße (äquivalent: Ist-Schrumpfung), auf deren Grundlage der Kompensationswert fortlaufend angepasst wird. Insgesamt werden somit manuelle Eingriffe in den Betrieb auf ein Minimum reduziert und die Regelung wird kontinuierlich optimiert. Entsprechend kann auch die Zusammenarbeit mit den gegebenenfalls vorhandenen und oben beschriebenen weiteren Reglern stetig verbessert werden.

Sofern der Drucker einen eigenen Trockner zur Trocknung des Druckbilds aufweist, ist es vorteilhaft, diesen Trockner zu nutzen, um eine Verhornung der Bahn zu erzielen, was die Bahn insgesamt weniger anfällig für eine Schrumpfung macht. Der gleiche Effekt kann analog auch mit einem Trockner innerhalb der Wellpappenanlage erzielt werden. Der Trockner sollte möglichst weit stromauf innerhalb des Prozessabschnitts liegen oder stromauf außerhalb davon.

Eine erfindungsgemäße Wellpappenanlage ist ausgebildet, ein Verfahren wie vorstehend beschrieben durchzuführen.

Nachfolgend werden Ausführungsbeispiele der Erfindung anhand einer Zeichnung näher erläutert. Darin zeigen jeweils schematisch:
Fig. 1 eine Wellpappenanlage,
Fig. 2 ein Verfahren zum Betrieb der Wellpappenanlage aus Fig. 1,
Fig. 3 eine Regelung der Wellpappenanlage 2 aus Fig. 1,
Fig. 4 eine bedruckte Bahn in einer Draufsicht,
Fig. 5 Ist- und Soll-Endmaß im Vergleich,
Fig. 6 Varianten des Verfahrens,
Fig. 7 eine weitere Variante des Verfahrens.

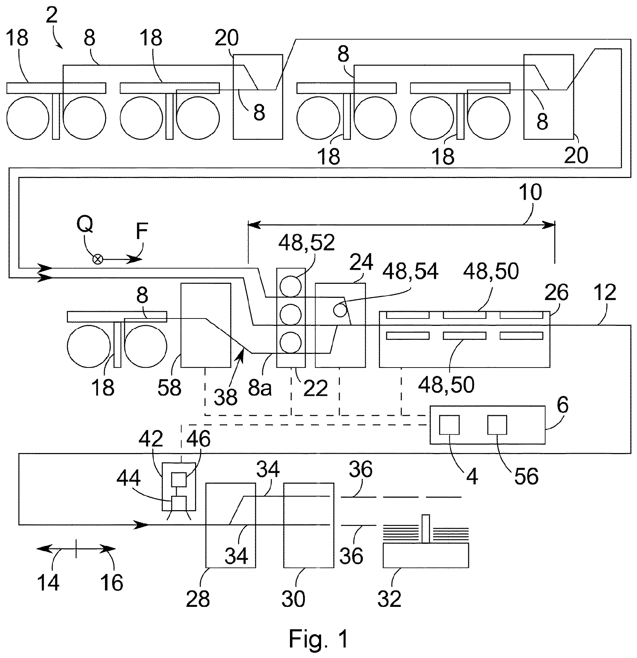

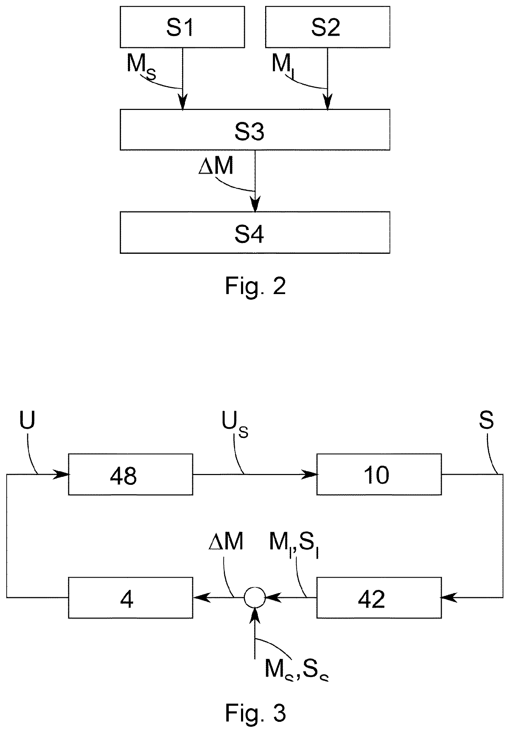

In Fig. 1 ist ein Ausführungsbeispiel für eine erfindungsgemäße Wellpappenanlage 2 dargestellt. Fig. 2 zeigt ein beispielhaftes Verfahren zum Betrieb einer solchen Wellpappenanlage 2, Fig. 3 zeigt ein Ausführungsbeispiel einer Regelung, welche ein Teil dieses Verfahrens ist und mit einem Regler 4 umgesetzt ist. Der Regler 4 ist Teil einer Steuereinheit 6 der Wellpappenanlage. Bei dem Verfahren werden mehrere Bahnen 8, hier Papierbahnen, in einem Prozessabschnitt 10 der Wellpappenanlage 2 zu einer Wellpappenbahn 12 verbunden. Dieser Prozessabschnitt 10 ist ein Teil eines Wet-Ends 14 der Wellpappenanlage 2. Stromab des Wet-Ends 14 weist die Wellpappenanlage 2 ein Dry-End 16 auf.

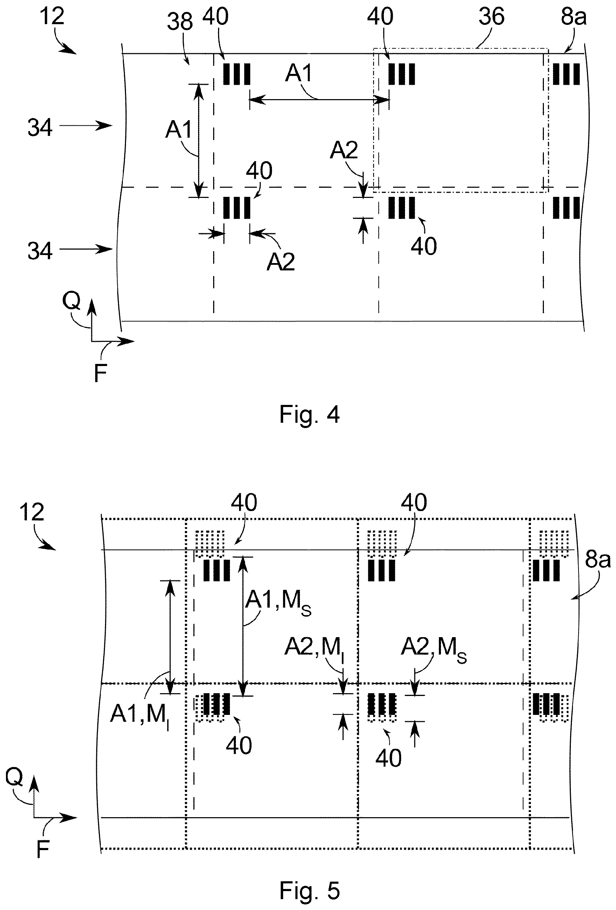

Die hier exemplarisch gezeigte Wellpappenanlage 2 weist mehrere Anlagenteile wie folgt auf: mehrere Abroller 18, mit welchen jeweils eine der Bahnen 8 abgerollt wird, mehrere Single Facer 20, mit welchen jeweils eine der Bahnen 8 gewellt wird und mit einer anderen der Bahnen 8 verbunden wird, einen Vorheizer 22 und ein Leimwerk 24, mit welchen die Bahnen 8, 8a miteinander verleimt werden, und eine Heiz- und Zugpartie 26 (Double Facer), mit welcher die miteinander verleimten Bahnen 8, 8a zusammengedrückt und getrocknet werden, sodass schließlich eine Wellpappenbahn 12 ausgegeben wird. Die vorgenannten Anlagenteile bilden das Wet-End 14, an welches sich dann das Dry-End 16 anschließt, zum Konfektionieren der Wellpappenbahn 12. In der hier gezeigten Ausgestaltung weist das Dry-End 16 einen Schneid-/Rillautomaten 28, stromab davon einen Querschneider 30 und weiter stromab eine Ablage 32 auf. In Fig. 4 ist ausschnittsweise eine beispielhafte Wellpappenbahn 12 gezeigt, wobei die Strichlinien die Konfektionierung durch den Schneid-/Rillautomaten 28 und den Querschneider 30 anzeigen. Mit dem Schneid-/Rillautomaten 28 wird die Wellpappenbahn 12 längs in Förderrichtung F in mehrere Teilbahnen 34 zerteilt und noch mit zusätzlichen, hier nicht gezeigten Schnitten und Rillen versehen. Anschließend werden die Teilbahnen 34 mit dem Querschneider 30 in einzelne Bögen 36 zerteilt und schließlich in der Ablage 32 abgelegt.

Eine (d.h. zumindest eine) der Bahnen 8 ist mit einem Druckbild 38 bedruckt, welches eine Anzahl an wiederkehrenden Druckbildelementen 40 aufweist. Diese Bahn 8a wird auch als bedruckte Bahn 8a bezeichnet. In Fig. 4 ist die bedruckte Bahn 8a eine kaschierbahn und somit eine oberste Lage der dort gezeigten Wellpappenbahn 12. Das Druckbild 38 stellt den gesamte Druck auf der Bahn 8a dar. Die Druckbildelemente 40 wiederholen sich gemäß der Anzahl an Bögen 36, welche letztendlich hergestellt werden sollen. Die einzelnen Druckbildelemente 40 sind z.B. Logos, Muster, Rahmen, Verzierungen, Markierungen, Marken 42, Registermarken, Steuermarken usw. Die Druckbildelemente 40 sind vorliegend wiederkehrend sowohl in Förderrichtung F angeordnet als auch in einer Querrichtung Q senkrecht zur Förderrichtung F und für entsprechend viele nebeneinander laufende Teilbahnen 34 (in Fig. 4 zwei Teilbahnen 34).

In einem ersten Schritt S1 des Verfahrens wird für das Druckbild 38 ein Soll-Endmaß M_{S} vorgegeben, welches stromab des Prozessabschnitts 10 vorliegen soll. Das Soll-Endmaß M_{S} ist beispielsweise ein Abstand A1 zwischen zwei gleichen Druckbildelementen 40 (äquivalent: relative Position zueinander) oder eine Abmessung A2 (z.B. Größe, Länge, Breite) eines einzelnen Druckbildelements 40. Das Soll-Endmaß M_{S} gibt an, wie das Druckbild 38 tatsächlich beim Einlaufen in das Dry-End 16 und speziell beim Konfektionieren sowie am fertigen Bogen 36 dimensioniert sein soll.

Das Druckbild 38 weist stromab des Prozessabschnitts 10 ein Ist-Endmaß M_{I} auf, welches sich regelmäßig von dem Soll-Endmaß M_{S} unterscheidet. Dies ist in Fig. 5 illustriert, welche wie in Fig. 4 die Wellpappenbahn 12 zeigt, wobei aber das Druckbild 38 ein Ist-Endmaß M_{I} aufweist, welches sich von dem Soll-Endmaß M_{S}, welches in Punktlinien als Überlagerung dargestellt ist, unterscheidet, wobei der Übersichtlichkeit halber nicht alle Abstände A1 und Abmessungen A2 aus Fig. 4 gezeigt sind. In Fig. 5 ist das Ist-Endmaß M_{I}, kleiner als das Soll-Endmaß M_{S}, dies kann aber auch umgekehrt sein. Das Ist-Endmaß M_{I} wird in einem zweiten Schritt S2 mit einer Messeinheit 42 gemessen. Mit dem Ist-Endmaß M_{I} und dem Soll-Endmaß M_{S} wird dann in einem dritten Schritt S3 ein Endmaß-Fehler ΔM ermittelt. Das Ist-Endmaß M_{I} ist stark abhängig von der Bearbeitung innerhalb des Prozessabschnitts 10 und unterliegt natürlicherweise Schwankungen. Entsprechend ergibt sich als Unterschied zwischen dem Ist-Endmaß M_{I} und dem Soll-Endmaß M_{S} der genannte Endmaß-Fehler ΔM, welcher z.B. als eine Differenz oder als ein Skalierungsfaktor dargestellt wird. Je nachdem, wie der Prozessabschnitt 10 geführt wird, ist das Ist-Endmaß M_{I} größer oder kleiner als das Soll-Endmaß M_{S}.

Wie aus den vorigen Ausführungen deutlich wird, sind für das Ist-Endmaß M_{I} verschiedene Ausgestaltungen geeignet, z.B. der Abstand A1 zwischen zwei Druckbildelementen 40 des Druckbilds 38 ist (Abstandsmessung oder relative Positionsmessung) oder die Abmessung A2 eines einzelnen Druckbildelements 40 des Druckbilds 38 (Größenmessung oder absolute Positionsmessung). Allgemeiner wird demnach das Ist-Endmaß M_{I} entweder als relatives Maß, z.B. der genannte Abstand A1, zwischen zwei unterschiedlichen oder gleichen Druckbildelementen 40 bestimmt oder als absolutes Maß, z.B. die genannte Abmessung A2 (Größe), an einem einzelnen Druckbildelement 40. Welche dieser beiden Ausgestaltungen genutzt wird, hängt unter anderem von dem konkreten Auftrag und den tatsächlich vorhandenen Druckbildelementen 40 ab.

Die Bahnen 8, 8a und die Wellpappenbahn 12 werden allgemein in der Förderrichtung F durch die Wellpappenanlage 2 geführt. Das Ist-Endmaß M_{I} wird vorliegend in der Querrichtung Q quer zur Förderrichtung F gemessen, kann aber auch in anderer Richtung gemessen werden. Analog wird vorliegend auch das Soll-Endmaß M_{S} in Querrichtung Q vorgegeben. Typischerweise ist die Schrumpfung S in Querrichtung Q um etwa einen Faktor 3 größer als in Förderrichtung F, wie auch in Fig. 5 illustriert ist.

In einem vierten Schritt S4 steuert der Regler 4 den Prozessabschnitt 10 abhängig von dem Endmaß-Fehler ΔM, um diesen zu minimieren. Der Endmaß-Fehler ΔM wird demnach als Fehlersignal für den Regler 4 verwendet, das Ist-Endmaß M und das Soll-Endmaß M_{S} werden als ein Istwert beziehungsweise ein Sollwert verwendet. Ein Ausführungsbeispiel für die mit dem Regler 4 realisierte Regelung ist in Fig. 3 gezeigt. Der Regler 4 gibt dann eine Steuergröße U aus, mit welcher der Prozessabschnitt 10 gesteuert wird. Sofern sich nun durch den Prozessabschnitt 10 eine variierende Verschiebung oder Skalierung des Druckbilds 38 und dessen einzelner Druckbildelemente 40 ergibt (z.B. wie in Fig. 5), wird dies durch den Regler 4 ausgeglichen. Optional greift der Regler 4 erst dann ein, wenn der Endmaß-Fehler ΔM einen bestimmten Grenzwert über-/unterschreitet.

In dem hier gezeigten Ausführungsbeispiel ist das Druckbild 38 mit einem Druckmaß M_{D} aufgedruckt, welches sich aus einer Soll-Schrumpfung S_{S} und dem Soll-Endmaß M_{S} ergibt, sodass der Regler 4 effektiv eine Schrumpfung S des Druckbilds 38 auf die Soll-Schrumpfung S_{S} regelt. Das Bedrucken mit dem vergrößerten Druckmaß M_{D} gestattet eine definierte Schrumpfung S in gewissem Umfang (analog zur in Fig. 5 gezeigten Schrumpfung im Zusammenhand mit Ist-Endmaß M_{I} und Soll-Endmaß M_{S}). Dieser Umfang ist definiert durch eine Abweichung des Druckmaßes M_{D} vom Soll-Endmaß M_{S} und wird mit einem Kompensationswert K quantifiziert, welcher einen Unterschied zwischen Druckmaß M_{D} und Soll-Endmaß M_{S} angibt. Der Kompensationswert K ist beispielsweise ein Faktor oder eine Verschiebung. Entsprechend wird mit dem Druckmaß M_{D} und dem Soll-Endmaß M_{S} eine Soll-Schrumpfung S_{S} vorgegeben, nämlich diejenige Schrumpfung S, welche entlang des Prozessabschnitts 10 erlaubt wird, sodass das Druckmaß M_{D} auf das Soll-Endmaß M_{S} schrumpft. Analog ergibt sich dann bei einer tatsächlichen und möglicherweise variierenden Schrumpfung S stromab des Prozessabschnitts 10 eine Ist-Schrumpfung S_{I}, welche sich gegebenenfalls von der Soll-Schrumpfung S_{S} unterscheidet. Der weiter oben bereits genannte Endmaß-Fehler ΔM für den Regler 4 ist dann auch ein Maß dafür, wie die Ist-Schrumpfung S_{I} von der Soll-Schrumpfung S_{S} abweicht, und wird daher auch als "Schrumpfungs-Abweichung" bezeichnet. Durch die hier beschriebene Regelung des Endmaß-Fehlers ΔM wird dann effektiv die Schrumpfung S des Druckbilds 38 auf die Soll-Schrumpfung S_{S} geregelt, sodass eine Schrumpfungs-Regelung realisiert ist. Die Soll-Schrumpfung S_{S} ist dabei durch den Kompensationswert K definiert.

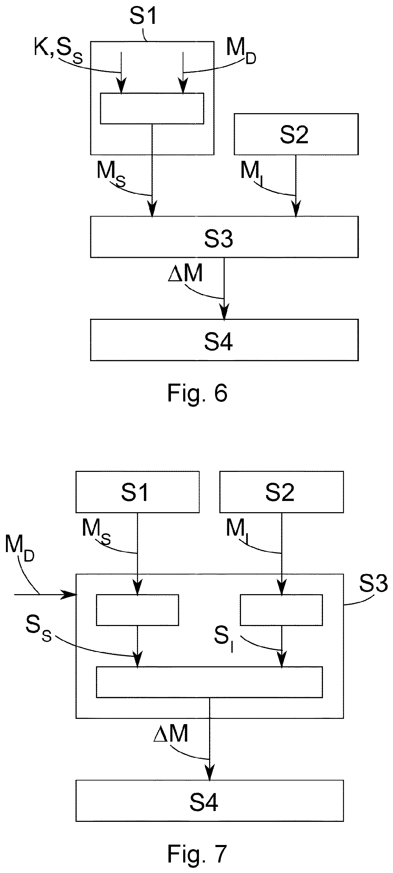

Wie vorstehend beschrieben, soll im Schritt S1 des Verfahrens das Soll-Endmaß M_{S} vorgegeben werden. Dies wird auch erfüllt, wenn konkret die Soll-Schrumpfung S_{S} oder der Kompensationswert K vorgegeben wird, da mit dieser beziehungsweise diesem dann über das bekannte Druckmaß M_{D} automatisch auch das Soll-Endmaß M_{S} vorgegeben ist. Diese Varianten des Verfahrens sind in Fig. 6 illustriert.

In einer möglichen Ausgestaltung wird im dritten Schritt S3 aus dem Druckmaß M_{D} und dem Ist-Endmaß M_{I}, die Ist-Schrumpfung S_{I} errechnet und analog aus dem Druckmaß M und dem Soll-Endmaß M_{S} die Soll-Schrumpfung S_{S}, sofern diese nicht schon direkt vorgegeben ist. Eine entsprechende Variante des Verfahrens ist in Fig. 7 illustriert. Die Ist-Schrumpfung S_{I} wird dann mit der Soll-Schrumpfung S_{S} verglichen und daraus der Endmaß-Fehler ΔM errechnet, z.B. als Differenz oder Verhältnis von Ist-Schrumpfung S_{I} und Soll-Schrumpfung S_{S} oder kombiniert als Differenz von Ist-Schrumpfung S_{I} und Soll-Schrumpfung S_{S} im Verhältnis zur Soll-Schrumpfung S_{S} (d.h. ΔM = (S_{I} - S_{S})/S_{S}). Der Endmaß-Fehler ΔM gibt dann denjenigen Anteil der gesamten Schrumpfung S an, welcher die Ist-Schrumpfung S_{I} von der Soll-Schrumpfung S_{S} unterscheidet, also unbeabsichtigt ist und kompensiert werden soll. Analog und im Ergebnis äquivalent kann der Endmaß-Fehler ΔM auch direkt aus Messung und Vergleich von Ist-Endmaß M_{I} und Soll-Endmaß M_{S} ermittelt werden, z.B. gemäß (M_{I} - M_{S})/M_{S}. Wie aus diesen Ausführungen und den Fig. 2, 6 und 7 deutlich wird, sind verschiedene Ausgestaltungen hinsichtlich der Wahl und Verarbeitung von Ist-Endmaß M_{I} und Soll-Endmaß M_{S} sowie Wahl und Ermittlung des Endmaß-Fehlers ΔM möglich und geeignet.

Die Messeinheit 42 weist zur Messung des Ist-Endmaßes M_{I} eine Sensoreinheit 44 auf, vorliegend eine optische Sensoreinheit, z.B. eine Kamera. Die Sensoreinheit 44 ist auf die bedruckte Bahn 8a gerichtet und erfasst das durchlaufende Druckbild 38 und damit auch die einzelnen Druckbildelemente 40. Dabei ist es nicht zwingend erforderlich, dass die Kamera die gesamte Bahn 8a überwacht. Die Messeinheit 42 weist weiterhin eine Auswerteeinheit 46 auf, welche mit der Sensoreinheit 44 verbunden ist und anhand entsprechender Sensordaten der Sensoreinheit 44 dann das Ist-Endmaß M_{I} ermittelt. Das Ist-Endmaß M_{I} wird wiederkehrend gemessen. Da das Druckbild 38 aufgrund der wiederkehrenden Druckbildelemente 40 eine Periodizität zumindest in Förderrichtung F aufweist, ist mit derselben Periodizität eine Messung des Ist-Endmaßes M_{I} möglich.

Die Regelung mittels des Reglers 4 beseitigt den Endmaß-Fehler ΔM, indem entsprechend geeignet in einen Verarbeitungsprozess, welcher entlang des Prozessabschnitts 10 erfolgt, eingegriffen wird. Die Regelung regelt somit die Schrumpfung S, welche sich durch den Verarbeitungsprozess entlang des Prozessabschnitts 10 ergibt, auf die Soll-Schrumpfung S_{S}. Allgemein weist der Prozessabschnitt 10 wenigstens eine Stellgröße U_{S} auf, welche zur Minimierung des Endmaß-Fehlers ΔM mit dem Regler 4 eingestellt wird. Die Stellgröße U_{S} ist einem entsprechenden Stellglied 48 zugeordnet, welches Teil des Prozessabschnitts 10 ist und welches vom Regler 4 mit einer geeigneten Steuergröße U gesteuert wird. Die Stellgröße U_{S} ist beispielsweise ausgewählt aus folgenden Stellgrößen U_{S}: ein Umschlingungswinkel des Vorheizers 22; eine Menge an zugeführter Wärmezufuhr in der Heiz- und Zugpartie 26; eine Temperatur oder ein Dampfdruck einer Heizplatte 50; eine Menge an Wasser, welche mit einem Sprühbalken oder Dampfsprühbalken der Wellpappenanlage 2 (auf wenigstens eine der Bahnen 8, 8a) aufgetragen wird; eine Menge an Leim, welcher mit dem Leimwerk 24 aufgetragen wird; eine Bahngeschwindigkeit der Wellpappenanlage 2. Speziell am Leimwerk 24 ergibt sich regelmäßig eine Quellung der Bahn 8, 8a aufgrund der über den Leim in die Bahn 8, 8a eingebrachten Feuchtigkeit. Auch Sprüh- und Dampfsprühbalken wirken entsprechend quellend. Umgekehrt wirken jegliche Heiz- und Trocknungsprozesse schrumpfend. Geeignete Stellglieder 48, welche vom Regler 4 angesteuert werden, sind entsprechend generell solche Stellglieder 48, welche Wärme und/oder Feuchtigkeit in zumindest eine der Bahnen 8, 8a eintragen, d.h. Heiz-, Kühl-, Trocken- und/oder Befeuchtungsvorrichtungen. Zu den genannten Stellgrößen U sind dies eine Heizrolle 52 des Vorheizers 22, die genannte Heizplatte 50, eine Leimauftragsrolle 54 des Leimwerks 24, ein Sprühbalken oder Dampfsprühbalken, ein Trockner, z.B. IR- oder Heißlufttrockner. Generell sind jegliche Anlagenteile, welche die Schrumpfung S der bedruckten Bahn 8a beeinflussen, geeignete Stellglieder 48 für die hier beschriebene Regelung.

Auch die Bahngeschwindigkeit beeinflusst die Schrumpfung S und somit den Endmaß-Fehler ΔM, da mit variierender Bahngeschwindigkeit auch die Kontaktzeit der bedruckten Bahn 8a mit den verschiedenen Anlagenteilen variiert und dadurch die Bahn 8a entsprechend schwankend temperiert und befeuchtet wird. Abseits einer möglichen Nutzung der Bahngeschwindigkeit als Stellgröße U_{S} der hier beschriebenen Regelung wird die Bahngeschwindigkeit aber regelmäßig auch aus anderen Gründen gegebenenfalls variiert, sodass sich ein entsprechender Endmaß-Fehler ΔM ergibt. Ein solcher Endmaß-Fehler ΔM aufgrund einer (zeitlich) variierenden Bahngeschwindigkeit wird vorliegend mittels des Reglers 4 minimiert. Entsprechend steuert der Regler 4 den Prozessabschnitt 10 vorliegend unabhängig von der Bahngeschwindigkeit der Wellpappenanlage 2. Darunter wird verstanden, dass die Bahngeschwindigkeit kein Eingangsparameter für den Regler 4 ist. Mit anderen Worten: der Regler gewährleistet im Betrieb mit variierender Bahngeschwindigkeit eine optimale Maßhaltigkeit des Druckbilds 38.

Möglich ist auch eine Ausgestaltung, bei welcher das Soll-Endmaß M_{S} im ersten Schritt S1 abhängig von der Bahngeschwindigkeit vorgegeben wird. In einer möglichen Ausgestaltung sind mehrere aufeinanderfolgende Geschwindigkeitsintervalle für die Bahngeschwindigkeit definiert und jedem dieser Geschwindigkeitsintervalle ist ein bestimmter Wert für das Soll-Endmaß M_{S} zugeordnet, z.B. mittels unterschiedlicher Werte für die Soll-Schrumpfung S_{S}. Je nachdem, welche Bahngeschwindigkeit dann tatsächlich gefahren wird, wird ein entsprechender Wert für das Soll-Endmaß M_{S} verwendet.

Die hier exemplarisch gezeigte Wellpappenanlage 2 weist zusätzlich zu dem hier beschriebenen (ersten) Regler 4 noch einen oder mehrere weitere (zweite) Regler 56 auf, z.B. einen Warpregler oder einen Verklebungsregler. Im Falle mehrerer Regler 4, 56 weisen diese dann regelmäßig überlappende oder sogar identische Stellgrößen U_{S} auf, sodass dieselbe Stellgröße U_{S} dann von mehreren Reglern 4, 56 beeinflusst wird. Zwei Beispiele für Regelungen, welche mit solchen weiteren Reglern 56 umgesetzte werden, sind eine Warpregelung, zur Minimierung von Warp der fertigen Bögen 36, und eine Verklebungsregelung, zur Regelung des Leimauftrags im Leimwerk 24. Diese Regelungen sollen eine möglichst gute Qualität der Wellpappenbahn 12 und der fertigen Bögen 36 gewährleisten und erfordern daher eine gewisse Einstellbarkeit der jeweils verwendeten Stellgröße/Stellgrößen U_{S}. Die hier beschriebene Regelung mit dem ersten Regler 4, soll eine solche zusätzliche Regelung mit einem weiteren Regler 56 möglichst nicht nachteilig stören und wird daher nachgeordnet. In einer möglichen Ausgestaltung stellt der Regler 4 die Stellgröße U_{S} des Prozessabschnitts 10 innerhalb eines Einstellbereichs ein und zumindest ein Grenzwert (z.B. Minimum oder Maximum) des Einstellbereichs ist durch die Warpregelung oder die Verklebungsregelung der Wellpappenanlage 2 vorgegeben. Mit anderen Worten: die Warp- oder Verklebungsregelung mit dem zweiten Regler 56 erfordert, dass die Stellgröße U_{S}, welche vom ersten Regler 4 eingestellt wird, innerhalb bestimmter Grenzwerte liegt, um eine hinreichende Qualität hinsichtlich Warp beziehungsweise Verleimung zu erzielen. Der Einstellbereich wird daher auf diese Grenzwerte beschränkt. Typischerweise wird die Stellgröße U_{S}, deren Einstellbereich beschränkt wird, sowohl vom ersten Regler 4 als auch vom zweiten Regler 56 verwendet, dies ist aber an sich nicht zwingend; ausreichend ist bereits, dass für die Stellgröße U_{S} abseits von der Regelung mit dem ersten Regler 4 ein Grenzwert eingehalten werden soll, z.B. um sicherzustellen, dass der zweite Regler 56 mit einer anderen Stellgröße noch ausreichend gegensteuern kann.

In Fig. 1 ist die Sensoreinheit 44 - vorliegend sogar die gesamte Messeinheit 42 - innerhalb der Wellpappenanlage 2 an einer Stelle angeordnet, stromab welcher keine signifikante Änderung des Druckbilds 38 mehr zu erwarten ist. Dies ist stromab des Wet-Ends 14 und am Eingang des Dry-Ends 16 der Fall. Die Heiz- und Zugpartie 26 markiert ein Ende des Wet-Ends 14, sodass die Sensoreinheit 44 dann stromab der Heiz- und Zugpartie 26 angeordnet ist. Allgemein ist die Sensoreinheit 44 stromab des Wet-Ends 14 und/oder im Dry-End 16 angeordnet.

Im hier gezeigten Ausführungsbeispiel ist die Sensoreinheit 44 auch stromauf des Schneid-/Rillautomaten 28 angeordnet und wird zusätzlich zur Erkennung von Marken 40 zwecks Steuerung des Schneid-/Rillautomaten 28 verwendet. Diese Marken 40 werden vorliegend auch zur Messung des Ist-Endmaßes M_{I} verwendet, dies ist aber nicht zwingend und es können auch andere Druckbildelemente 40 hierfür verwendet werden. Die genannten Marken sind aufgedruckt und dienen als Steuermarken zur Aktivierung des Schneid-/Rillautomaten 28. Optional werden dieselbe Sensoreinheit 44/Messeinheit 42 und weiter optional auch dieselben Marken 40 zur Steuerung des Querschneiders 30 genutzt. Die Marken 40 sind vorliegend Balkenmarken und allgemein Druckbildelemente 40 des Druckbilds 38. Die Messeinheit 42 erfüllt nun wenigstens zwei Funktionen, nämlich einmal die Messung des Ist-Endmaßes M_{I} und einmal die Erkennung der Marken 40 zur Steuerung eines Anlagenteils des Dry-Ends 16, hier des Schneid-/Rillautomaten 28.

Das Bedrucken der Bahn 8 mit dem Druckbild 38 kann außerhalb oder innerhalb der Wellpappenanlage 2 erfolgen, wobei letzteres in Fig. 1 gezeigt ist und als inline-Druck bezeichnet wird. Für den inline-Druck ist in die Wellpappenanlage 2 ein Drucker 58 integriert, welcher die eine der Bahnen 8 mit dem Druckbild 38 bedruckt und dadurch die bedruckte Bahn 8a erzeugt. Der Drucker 58 ist vorliegend unmittelbar stromab eines der Abroller 18 angeordnet und bedruckt dann eine der Bahnen 8 noch bevor diese mit den übrigen Bahnen 8 zur Wellpappenbahn 12 verbunden wird. Dies ist aber nicht zwingend. Der Drucker 58 ist kein Teil des Prozessabschnitts 10, sondern außerhalb davon. Der Drucker 58 selbst enthält auch keine Druckbildregelung zur Einstellung des Druckmaßes M_{D} oder dergleichen.

Eine Regelung auf das Soll-Endmaß M_{S} erfolgt demnach nicht mit dem Drucker 58, sondern außerhalb desselben mit dem hier beschriebenen Regler 4 und durch eine Steuerung der Wellpappenanlage 2 abseits des Druckers 58. Optional wird der Drucker 58 jedoch zumindest derart gesteuert, z.B. mit der Steuereinheit 6, dass zusätzlich zur bereits beschriebenen Regelung noch das Druckmaß M_{D} angepasst wird, z.B. indem der Kompensationswert K entsprechend je nach Bedarf variiert wird.

Sofern der Drucker 58 einen eigenen Trockner zur Trocknung des Druckbilds 38 aufweist, kann dieser Trockner auch genutzt werden, um eine Verhornung der Bahn 8a zu erzielen, was diese insgesamt weniger anfällig für eine Schrumpfung macht. Der gleiche Effekt kann analog auch mit einem Trockner innerhalb der Wellpappenanlage 2 erzielt werden. Ein solcher Trockner sollte möglichst weit stromauf innerhalb des Prozessabschnitts 10 liegen oder stromauf außerhalb davon.

### Bezugszeichenliste

- 2: Wellpappenanlage
- 4: (erster) Regler
- 6: Steuereinheit
- 8: Bahn
- 8a: bedruckte Bahn
- 10: Prozessabschnitt
- 12: Wellpappenbahn
- 14: Wet-End
- 16: Dry-End
- 18: Abroller
- 20: Single Facer
- 22: Vorheizer
- 24: Leimwerk
- 26: Heiz- und Zugpartie
- 28: Schneid-/Rillautomaten
- 30: Querschneider
- 32: Ablage
- 34: Teilbahn
- 36: Bogen
- 38: Druckbild
- 40: Druckbildelement, Marke
- 42: Messeinheit
- 44: Sensoreinheit
- 46: Auswerteeinheit
- 48: Stellglied
- 50: Heizplatte
- 52: Heizrolle
- 54: Leimauftragsrolle
- 56: (zweiter) Regler
- 58: Drucker
- A1: Abstand
- A2: Abmessung
- F: Förderrichtung
- K: Kompensationswert
- M_{D}: Druckmaß
- M_{I}: Ist-Endmaß
- M_{S}: Soll-Endmaß
- Q: Querrichtung
- S: Schrumpfung
- S_{I}: Ist-Schrumpfung
- S_{S}: Soll-Schrumpfung
- S1: erster Schritt
- S2: zweiter Schritt
- S3: dritter Schritt
- S4: vierter Schritt
- U: Steuergröße
- U_{S}: Stellgröße

## Patentansprüche

1. Verfahren zum Betrieb einer Wellpappenanlage (2),
a. wobei mehrere Bahnen (8, 8a) in einem Prozessabschnitt (10) der Wellpappenanlage (2) zu einer Wellpappenbahn (12) verbunden werden,
b. wobei eine der Bahnen (8, 8a) mit einem Druckbild (38) bedruckt ist, welches eine Anzahl an wiederkehrenden Druckbildelementen (40) aufweist,
c. wobei für das Druckbild (38) ein Soll-Endmaß (M_{S}) vorgegeben wird, welches stromab des Prozessabschnitts (10) vorliegen soll,
d. wobei das Druckbild (38) stromab des Prozessabschnitts (10) ein Ist-Endmaß (M_{I})aufweist, welches mit einer Messeinheit (42) gemessen wird,
e. wobei mit dem Ist-Endmaß (M_{I})und dem Soll-Endmaß (M_{S}) ein Endmaß-Fehler (ΔM) ermittelt wird,
f. wobei die Wellpappenanlage (2) einen Regler (4) aufweist, welcher den Prozessabschnitt (10) abhängig von dem Endmaß-Fehler (ΔM) steuert, um diesen Endmaß-Fehler (ΔM) zu minimieren.

2. Verfahren nach Anspruch 1,
wobei das Druckbild (38) mit einem Druckmaß (M_{D}) aufgedruckt ist, welches sich aus einer Soll-Schrumpfung (S_{S}) und dem Soll-Endmaß (M_{S}) ergibt, sodass der Regler (4) eine Schrumpfung (S) des Druckbilds (38) auf die Soll-Schrumpfung (S_{S}) regelt.

3. Verfahren nach Anspruch 1 oder 2,
wobei das Ist-Endmaß (M_{I}) ein Abstand (A1) zwischen zwei Druckbildelementen (40) des Druckbilds (38) ist.

4. Verfahren nach Anspruch 1 oder 2,
wobei das Ist-Endmaß (M_{I}) eine Abmessung (A2) eines einzelnen Druckbildelements (40) des Druckbilds (38) ist.

5. Verfahren nach einem der Ansprüche 1 bis 4,
wobei die Bahnen (8, 8a) und die Wellpappenbahn (12) in einer Förderrichtung (F) durch die Wellpappenanlage geführt (2) werden,
wobei das Ist-Endmaß (M_{I}) in einer Querrichtung (Q) quer zur Förderrichtung (F) gemessen wird.

6. Verfahren nach einem der Ansprüche 1 bis 5,
wobei der Prozessabschnitt (10) wenigstens eine Stellgröße (U_{S}) aufweist, welche zur Minimierung des Endmaß-Fehlers (ΔM) mit dem Regler (4) eingestellt wird und welche ausgewählt ist aus folgenden Stellgrößen (U_{S}):
a. ein Umschlingungswinkel eines Vorheizers (22)) der Wellpappenanlage (2),
b. eine Menge an zugeführter Wärmezufuhr in einer Heiz- und Zugpartie (26) der Wellpappenanlage (2),
c. eine Temperatur einer Heizplatte (50) der Wellpappenanlage (2),
d. ein Dampfdruck einer Heizplatte (50) der Wellpappenanlage (2),
e. eine Menge an Wasser, welche mit einem Sprühbalken oder Dampfsprühbalken der Wellpappenanlage (2) aufgetragen wird,
f. eine Menge an Leim, welcher mit einem Leimwerk (24) der Wellpappenanlage (2) aufgetragen wird,
g. eine Bahngeschwindigkeit der Wellpappenanlage (2).

7. Verfahren nach einem der Ansprüche 1 bis 6,
wobei der Regler (4) den Prozessabschnitt (10) unabhängig von einer Bahngeschwindigkeit der Wellpappenanlage (2) steuert.

8. Verfahren nach einem der Ansprüche 1 bis 7,
wobei das Soll-Endmaß (M_{S}) abhängig von einer Bahngeschwindigkeit der Wellpappenanlage (2) vorgegeben wird.

9. Verfahren nach einem der Ansprüche 1 bis 8,
wobei der Regler (4) eine Stellgröße (U_{S}) des Prozessabschnitts (10) innerhalb eines Einstellbereichs einstellt,
wobei zumindest ein Grenzwert des Einstellbereichs durch eine Warpregelung oder eine Verklebungsregelung der Wellpappenanlage (2) vorgegeben ist.

10. Verfahren nach einem der Ansprüche 1 bis 9,
wobei die Wellpappenanlage (2) eine Heiz- und Zugpartie (26) aufweist, wobei die Messeinheit (42) eine Sensoreinheit (44) aufweist, welche stromab der Heiz- und Zugpartie (26) angeordnet ist.

11. Verfahren nach einem der Ansprüche 1 bis 10,
wobei die Wellpappenanlage (2) einen Schneid-/Rillautomaten (28) aufweist, wobei die Messeinheit (42) eine Sensoreinheit (44) aufweist, welche stromauf des Schneid-/Rillautomaten (28) angeordnet ist und zusätzlich zur Erkennung von Marken (40) zwecks Steuerung des Schneid-/Rillautomaten (28) verwendet wird.

12. Verfahren nach einem der Ansprüche 1 bis 11,
wobei in die Wellpappenanlage (2) ein Drucker (58) integriert ist, welcher die eine der Bahnen (8) mit dem Druckbild (38) bedruckt.

13. Wellpappenanlage (2), aufweisend:
a. Mittel zum Verbinden mehrerer Bahnen (8, 8a) in einem Prozessabschnitt (10) der Wellpappenanlage (2) zu einer Wellpappenbahn (12), wobei eine der Bahnen (8, 8a) mit einem Druckbild (38) bedruckt ist, welches eine Anzahl an wiederkehrenden Druckbildelementen (40) aufweist,
b. Mittel zur Vorgabe eines Soll-Endmaßes (M_{S}) für das Druckbild (38), welches stromab des Prozessabschnitts (10) vorliegen soll, wobei das Druckbild (38) stromab des Prozessabschnitts (10) ein Ist-Endmaß (M_{I}) aufweist, welches mit einer Messeinheit (42) gemessen wird,
c. Mittel zur Ermittlung eines Endmaß-Fehlers (ΔM) aus dem Ist-Endmaß (M_{I}) und dem Soll-Endmaß (M_{S}),
d. einen Regler (4), welcher den Prozessabschnitt (10) abhängig von dem Endmaß-Fehler (ΔM) steuert, um diesen Endmaß-Fehler (ΔM) zu minimieren; und
wobei die Wellpappenanlage (2) ausgebildet ist, ein Verfahren gemäß einem der Ansprüche 1 bis 12 durchzuführen.

## Claims

1. Method for operating a corrugated board plant (2),
a. wherein a plurality of webs (8, 8a) are connected in a process section (10) of the corrugated board plant (2) so as to form a corrugated board web (12),
b. wherein one of the webs (8, 8a) is printed with a print image (38) which has a number of recurring print image elements (40),
c. wherein a setpoint final dimension (M_{S}) is specified for the print image (38), which is to be present downstream of the process section (10),
d. wherein the print image (38) downstream of the process section (10) has an actual final dimension (M_{I}), which is measured by a measuring unit (42),
e. wherein a final dimension error (ΔM) is determined using the actual final dimension (M_{I}) and the setpoint final dimension (M_{S}),
f. wherein the corrugated board plant (2) has a controller (4) which controls the process section (10) as a function of the final dimension error (ΔM) in order to minimize this final dimension error (ΔM).

2. Method according to Claim 1,
wherein the print image (38) is printed with a print dimension (M_{D}) resulting from a setpoint shrinkage (S_{S}) and the setpoint final dimension (M_{S}), so that the controller (4) feedback-controls a shrinkage (S) of the print image (38) to the setpoint shrinkage (S_{S}).

3. Method according to Claim 1 or 2,
wherein the actual final dimension (M_{I}) is a distance (A1) between two print image elements (40) of the print image (38).

4. Method according to Claim 1 or 2,
wherein the actual final dimension (M_{I}) is a dimension (A2) of a single print image element (40) of the print image (38).

5. Method according to any of Claims 1 to 4,
wherein the webs (8, 8a) and the corrugated board web (12) are guided in a conveying direction (F) through the corrugated board plant (2),
wherein the actual final dimension (M_{I}) is measured in a transverse direction (Q) perpendicular to the conveying direction (F).

6. Method according to any of Claims 1 to 5,
wherein the process section (10) has at least one manipulated variable (U_{S}) which is set by the controller (4) to minimize the final dimension error (ΔM) and which is selected from the following manipulated variables (Us) :
a. a wrapping angle of a preheater (22)) of the corrugated board plant (2),
b. a quantity of heat supplied in a heating and drawing section (26) of the corrugated board plant(2),
c. a temperature of a heating plate (50) of the corrugated board plant (2),
d. a vapour pressure of a heating plate (50) of the corrugated board plant (2),
e. a quantity of water applied by a spray bar or steam spray bar of the corrugated board plant (2),
f. a quantity of glue applied by a gluing unit (24) of the corrugated board plant (2),
g. a web speed of the corrugated board plant (2).

7. Method according to one of Claims 1 to 6,
wherein the controller (4) controls the process section (10) independently of a web speed of the corrugated board plant (2).

8. Method according to one of Claims 1 to 7,
wherein the setpoint final dimension (M_{S}) is specified as a function of the web speed of the corrugated board plant (2).

9. Method according to one of Claims 1 to 8,
wherein the controller (4) sets a manipulated variable (U_{S}) of the process section (10) within a setting range, wherein at least one limit value of the setting range is specified by a warp control or an adhesion control of the corrugated board plant (2).

10. Method according to one of Claims 1 to 9,
wherein the corrugated board plant (2) has a heating and drawing section (26),
wherein the measuring unit (42) has a sensor unit (44) which is disposed downstream of the heating and drawing section (26).

11. Method according to one of Claims 1 to 10,
wherein the corrugated board plant (2) has an automatic cutting/scoring machine (28), wherein the measuring unit (42) has a sensor unit (44) which is disposed upstream of the automatic cutting/scoring machine (28) and is additionally used for identifying markings (40) for controlling the automatic cutting/scoring machine (28).

12. Method according to one of Claims 1 to 11,
wherein integrated into the corrugated board plant (2) is a printer (58) which prints the print image (38) on one of the webs (8).

13. Corrugated board plant (2), having:
a. means for connecting a plurality of webs (8, 8a) in a process section (10) of the corrugated board plant (2) so as to form a corrugated board web (12), wherein one of the webs (8, 8a) is printed with a print image (38) which has a number of recurring print image elements (40),
b. means for specifying a setpoint final dimension (M_{S}) for the print image (38), which is to be present downstream of the process section (10), wherein the print image (38) downstream of the process section (10) has an actual final dimension (M_{I}), which is measured by a measuring unit (42),
c. means for determining a final dimension error (ΔM) from the actual final dimension (M_{I}) and the setpoint final dimension (M_{S}),
d. a controller (4) which controls the process section (10) as a function of the final dimension error (ΔM) in order to minimize this final dimension error (ΔM); and
wherein the corrugated board plant (2) is designed to carry out a method according to one of Claims 1 to 12.

## Revendications

1. Procédé destiné à faire fonctionner une installation de carton ondulé (2),
a. plusieurs bandes (8, 8a) étant reliées dans une section de traitement (10) de l'installation de carton ondulé (2) pour former une bande de carton ondulé (12),
b. l'une des bandes (8, 8a) étant imprimée d'une image d'impression (38), qui comporte un certain nombre d'éléments d'image d'impression récurrents (40),
c. une dimension finale cible (M_{S}) qui doit être présente en aval de la section de traitement (10) étant prédéfinie pour l'image d'impression (38),
d. l'image d'impression (38) comportant en aval de la section de traitement (10) une dimension finale réelle (M_{I}), qui est mesurée avec une unité de mesure (42),
e. une erreur de dimension finale (ΔM) étant déterminée avec la dimension finale réelle (M_{I}) et la dimension finale de consigne (M_{S}),
f. l'installation de carton ondulé (2) comportant un régulateur (4) qui commande la section de traitement (10) en fonction de l'erreur de dimension finale (ΔM) pour minimiser ladite erreur de dimension finale (ΔM).

2. Procédé selon la revendication 1,
l'image d'impression (38) étant imprimée avec une dimension d'impression (M_{D}), qui résulte d'un rétrécissement de point de consigne (S_{S}) et de la dimension finale de consigne (M_{S}), si bien que le régulateur (4) régule un rétrécissement (S) de l'image d'impression (38) jusqu'au rétrécissement de consigne (S_{S}).

3. Procédé selon la revendication 1 ou 2,
la dimension finale réelle (M_{I}) étant une distance (A1) entre deux éléments d'image d'impression (40) de l'image d'impression (38).

4. Procédé selon la revendication 1 ou 2,
la dimension finale réelle (M_{I}) étant une dimension (A2) d'un seul élément d'image d'impression (40) de l'image d'impression (38).

5. Procédé selon l'une des revendications 1 à 4,
les bandes (8, 8a) et la bande de carton ondulé (12) étant guidées (2) à travers l'installation de carton ondulé dans une direction de transport (F),
la dimension finale réelle (M_{I}) étant mesurée dans une direction transversale (Q) transversalement à la direction de transport (F).

6. Procédé selon l'une des revendications 1 à 5,
la section de traitement (10) comportant au moins une grandeur de réglage (U_{S}), qui est réglée avec le régulateur (4) pour minimiser l'erreur de dimension finale (ΔM) et qui est choisie dans les grandeurs de réglage suivantes (U_{S}) :
a. un angle d'enroulement d'un système de préchauffage (22) de l'installation de carton ondulé (2),
b. une quantité de chaleur amenée dans une section de chauffage et de traction (26) de l'installation de carton ondulé (2),
c. une température d'une plaque chauffante (50) de l'installation de carton ondulé (2),
d. une pression de vapeur d'une plaque chauffante (50) de l'installation de carton ondulé (2),
e. une quantité d'eau, qui est appliquée avec une rampe de pulvérisation ou une rampe de pulvérisation de vapeur de l'installation de carton ondulé (2),
f. une quantité de colle, qui est appliquée avec un mécanisme d'encollage (24) de l'installation de carton ondulé (2),
g. une vitesse de bande de l'installation de carton ondulé (2).

7. Procédé selon l'une des revendications 1 à 6,
le régulateur (4) commandant la section de traitement (10) indépendamment d'une vitesse de bande de l'installation de carton ondulé (2).

8. Procédé selon l'une des revendications 1 à 7,
la dimension finale de consigne (M_{S}) étant prédéfinie en fonction de la vitesse de bande de l'installation de carton ondulé (2).

9. Procédé selon l'une des revendications 1 à 8,
le régulateur (4) réglant une variable de réglage (U_{S}) de la section de traitement (10) dans une plage de réglage, au moins une valeur limite de la plage de réglage étant prédéfinie par une régulation de gauchissement ou d'adhérence de l'installation de carton ondulé (2).

10. Procédé selon l'une des revendications 1 à 9,
l'installation de carton ondulé (2) comportant une section de chauffage et de traction (26),
l'unité de mesure (42) comportant une unité de détection (44) qui est disposée en aval de la section de chauffage et de traction (26).

11. Procédé selon l'une des revendications 1 à 10, l'installation de carton ondulé (2) comportant une machine de découpe/rainurage (28), l'unité de mesure (42) comportant une unité de détection (44), qui est disposée en amont de la machine de découpe/rainurage (28) et qui est utilisée en supplément pour identifier des marques (40) aux fins de la commande de la machine de découpe/rainurage (28).

12. Procédé selon l'une des revendications 1 à 11,
une imprimante (58) qui imprime l'image d'impression (38) sur l'une des bandes (8) étant intégrée dans l'installation de carton ondulé (2).

13. Installation de carton ondulé (2), comportant :
a. des moyens pour relier plusieurs bandes (8, 8a) dans une section de traitement (10) de l'installation de carton ondulé (2) en une bande de carton ondulé (12), l'une des bandes (8, 8a) étant imprimée avec une image d'impression (38), qui comporte un certain nombre d'éléments d'image d'impression récurrents (40),
b. des moyens destinés à prédéfinir une dimension finale de consigne (M_{S}) pour l'image d'impression (38), qui doit être présente en aval de la section de traitement (10), l'image d'impression (38) comportant en aval de la section de traitement (10) une dimension finale réelle (M_{I}), qui est mesurée avec une unité de mesure (42),
c. des moyens destinés à déterminer une erreur de dimension finale (ΔM) à partir de la dimension finale réelle (M_{I}) et de la dimension finale de consigne (M_{S}),
d. un régulateur (4), qui commande la section de traitement (10) en fonction de l'erreur de dimension finale (ΔM) pour minimiser ladite erreur de dimension finale (ΔM) ; et
l'installation de carton ondulé (2) étant réalisée pour mettre en œuvre un procédé selon l'une des revendications 1 à 12.
